# DEMANDE DE BREVET EUROPEEN

(11) **EP 2 716 595 A1**
(43) Date de publication de la demande: **09.04.2014**
(21) Numéro de dépôt: 13184370.8
(22) Date de dépôt: 13.09.2013
(51) Int. Cl.: B67D 7/02, F01M 11/04

(54) **Dispositif de transfert de liquide**

(30) Priorité: 02.10.2012 FR 1259326
(71) Demandeur: Oil System, 75009 Paris (FR)
(72) Inventeur: Gricourt, Yves, 71260 MONTBELLET (FR)
(74) Mandataire: Parzy, Benjamin Alain

(57) **Abrégé**

Ce dispositif de transfert d'un liquide comprend un élément de raccordement tubulaire (1) destiné à se fixer de manière étanché sur un orifice de transfert de liquide et comprenant un alésage (4) s'étendant de part et d'autre de l'élément de raccordement, et un clapet (3) monté de manière coulissante dans l'élément de raccordement entre une position d'obturation de l'élément de raccordement et une position de transfert de liquide à travers l'élément de raccordement à l'encontre d'un ressort de rappel (19) sollicitant le clapet en position d'obturation, le clapet étant susceptible de coulisser de la position d'obturation à la position de transfert de liquide sous l'action d'un adaptateur (22) connectable de manière réversible à l'élément de raccordement.

L'élément de raccordement et l'adaptateur comportent l'un un ensemble de rainures longitudinales (24) et l'autre des dents radiales qui s'engagent dans les rainures lors de l'actionnement de l'adaptateur (22), l'élément de raccordement comprenant une butée sur laquelle s'appuie l'adaptateur après actionnement du clapet par l'adaptateur.

## Description

L'invention concerne, de manière générale, le transfert de liquides, notamment par gravité, par pompage, ou sous l'effet d'une différence de pression.

Elle concerne plus particulièrement, dans une application plus particulièrement intéressante de l'invention, les bouchons destinés à venir se fixer sur les orifices de vidange des carters-moteurs des véhicules automobiles, et de machines outils.

Afin de faciliter la vidange de tels carters, de nombreuses solutions ont été proposées pour diminuer les manipulations effectuées au niveau de ce bouchon et réduire en conséquence la durée de réalisation de la vidange.

De tels bouchons sont destinés à venir se visser au niveau de l'orifice du carter et comportent un clapet mobile destiné à obturer le bouchon et susceptible d'être déplacé en translation au moyen d'un dispositif approprié, notamment un adaptateur monté à l'extrémité d'une conduite de vidange. Une fois mis en place au niveau du bouchon, cet adaptateur induit la pénétration du clapet à l'intérieur du carter ou, de manière générale, du récipient, libérant de la sorte l'orifice de vidange pour assurer l'écoulement du liquide et notamment de l'huile.

Un tel bouchon est par exemple décrit dans le document FR 2 773 365.

Le bouchon décrit dans ce document comporte un corps de bouchon comprenant une jupe radiale située entre le tiers et la moitié de la hauteur du corps et qui est destinée à venir prendre appui contre la paroi du carter lorsque le bouchon est vissé à fond.

A l'état monté, le corps délimite un prolongement en saillie, qui est pourvu d'une gorge annulaire permettant la fixation de l'adaptateur.

Intérieurement, le bouchon délimite un alésage dans lequel est monté le clapet.

Un ensemble de joints, sur lesquels s'appuie le clapet en position d'ouverture du bouchon, d'une part, et en position de fermeture, d'autre part, sont prévus à l'intérieur de l'alésage interne du corps du bouchon.

Ce type d'agencement souffre d'un certain nombre d'inconvénients.

Il a en effet été constaté, en premier lieu, que le corps du bouchon, qui constitue un élément de raccordement du dispositif, s'étend en saillie à partir du réservoir et dès lors est susceptible d'être altéré.

En second lieu, le vissage du dispositif sur le récipient s'effectue avec une clé plate.

En troisième lieu, le joint tourné vers l'extérieur du récipient n'est pas protégé et est dès lors susceptible d'être altéré.

Enfin, il a été constaté que le bouchon est réalisé de manière monobloc, ce qui ne permet pas de le réaliser en matériaux différents.

Le but de l'invention est donc de pallier tout ou partie des inconvénients précités.

Elle a donc pour objet un dispositif de transfert d'un liquide, comprenant un élément de raccordement tubulaire destiné à se fixer de manière étanche sur un orifice de transfert de liquide et comprenant un alésage s'étendant de part et d'autre de l'élément de raccordement, et un clapet monté de manière coulissante dans l'élément de raccordement entre une position d'obturation de l'élément de raccordement et une position de transfert de liquide à travers l'élément de raccordement, à l'encontre d'un ressort de rappel sollicitant le clapet en position d'obturation, le clapet étant susceptible de coulisser de la position d'obturation à la position de transfert de liquide sous l'action d'un adaptateur connectable de manière réversible à l'élément de raccordement.

En outre, l'élément de raccordement tubulaire et l'adaptateur comportent l'un un ensemble de rainures longitudinales et l'autre des dents radiales qui s'engagent dans les rainures lors de l'actionnement de l'adaptateur, l'élément de raccordement comprenant une butée sur laquelle s'appuie l'adaptateur après actionnement du clapet par l'adaptateur.

Dans un mode de réalisation, l'élément de raccordement comporte un ensemble de rainures longitudinales pratiquées sur sa surface périphérique interne et destinées à recevoir des dents radiales prévues sur l'adaptateur, lesdites rainures délimitant la butée sur laquelle s'appuient lesdites dents après actionnement du clapet par l'adaptateur.

Avantageusement, l'extrémité de l'élément de raccordement tubulaire comprenant la butée comprend des empreintes aptes à bloquer les dents radiales en rotation après actionnement du clapet.

Selon une autre caractéristique de l'invention, l'élément de raccordement comporte un corps doté d'un filetage externe destiné à coopérer avec un filetage correspondant prévu sur l'orifice de transfert de fluide, et comprend un alésage dans lequel sont pratiquées les rainures longitudinales, ledit alésage ayant une forme en coupe polygonale apte à recevoir une clé de vissage polygonale du bouchon.

Par exemple, les rainures longitudinales sont prévues au sommet de ladite forme polygonale.

On peut prévoir que l'alésage est hexagonal et comporte un ensemble de trois ou six rainures.

Dans un mode de réalisation, l'élément de raccordement tubulaire comporte une embase sur laquelle sont pratiquées lesdites rainures longitudinales et délimitant ladite butée, l'embase étant fixée sur l'élément de raccordement par collage ou soudage.

L'embase peut ainsi être réalisée dans un matériau différent du reste du bouchon.

Avantageusement, dans un mode de réalisation, lors du montage du dispositif de transfert sur un récipient, l'élément de raccordement tubulaire affleure la surface du récipient.

Selon encore une autre caractéristique de l'invention, le clapet comporte un corps de clapet ayant une première extrémité dotée d'un premier épaulement équipé d'un premier joint d'étanchéité qui vient en appui sur la butée en position d'obturation et qui constitue une surface d'actionnement du clapet et une deuxième extrémité dotée d'un deuxième joint d'étanchéité reposant en appui sur l'élément de raccordement tubulaire en position d'obturation du clapet.

On notera que le premier joint est disposé en retrait par rapport à l'extrémité libre de l'élément de raccordement destinée à recevoir l'adaptateur.

Avantageusement, une résine est disposée autour de l'élément de raccordement tubulaire, à l'endroit de son montage sur le récipient.

Selon encore une autre caractéristique de l'invention, le dispositif comporte en outre un adaptateur comprenant un corps d'adaptateur destiné à être raccordé à une conduite de transfert de liquide, un tube de raccordement monté sur le corps et doté de dents radiales d'extrémité et une coiffe montée axialement déplaçable par rapport au corps à l'encontre d'un ressort de rappel entre une position stable déployée dans laquelle elle coiffe le tube de raccordement, et une position instable escamotée par rapport au corps rendant accessible le tube de raccordement.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en coupe axiale d'un élément de raccordement d'un dispositif de transfert conforme à l'invention, montrant le clapet dans la position d'obturation et dans la position de transfert de liquide ;
- la figure 2 est une vue éclatée de l'élément de raccordement de la figure 1 ;
- la figure 3 illustre un autre mode de réalisation d'un élément de raccordement tubulaire d'un dispositif de transfert conforme à l'invention ;
- la figure 4 est une vue éclatée de l'élément de raccordement de la figure 3 ;
- les figures 5 et 6 sont des vues axiales d'un adaptateur d'un dispositif de transfert de liquide conforme à l'invention, respectivement en position stable déployée et en position instable escamotée ;
- les figures 7 et 8 sont des vues en perspective de l'adaptateur des figures 5 et 6, respectivement en position stable déployée et en position instable escamotée de la coiffe, et
- la figure 9 illustre schématiquement le montage d'un adaptateur sur un élément de raccordement tubulaire.

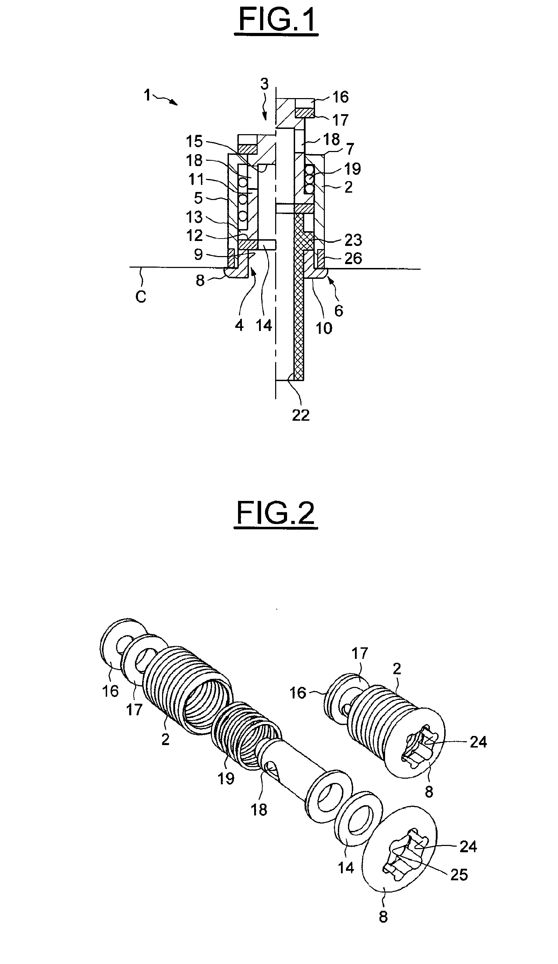

On va tout d'abord décrire, en référence aux figures 1 et 2, un premier mode de réalisation d'un élément de raccordement tubulaire d'un dispositif de transfert de liquide conforme à l'invention.

Dans l'exemple de réalisation envisagé, le dispositif de transfert de liquide est destiné à assurer la vidange de carters-moteurs de véhicules automobiles ou de machines outils.

Dans ce cas, l'élément de raccordement tubulaire visible sur les figures 1 et 2 constitue un bouchon qui vient se fixer par vissage au niveau de l'orifice de vidange d'un carter C.

Comme on le voit sur la figure 1, l'élément de raccordement tubulaire, qui sera désigné par la suite par le terme de « bouchon », désigné par la référence numérique générale 1, est fondamentalement constitué de deux parties, à savoir un corps de bouchon 2 et un clapet 3, susceptible de se mouvoir en translation au sein d'un alésage 4 ménagé dans le corps 2.

Ce bouchon étant destiné à venir se fixer au niveau de l'orifice de vidange d'un carter de moteur automobile, son corps présente extérieurement un filetage 5 correspondant au diamètre et au pas du taraudage de l'orifice de vidange du carter.

Comme on le voit, le corps 2 a une forme tubulaire et comporte une première extrémité 6, par laquelle il repose en appui sur la paroi du carter, et une extrémité opposée 7 tournée vers l'intérieur du réservoir, et qui comporte un passage axial permettant, comme cela sera détaillé par la suite, le passage du clapet 3 lors du transfert du liquide.

On voit encore sur la figure 1 que, dans ce mode de réalisation, le bouchon 1 est encore doté d'une embase 8 rapportée, fixée par collage ou soudage à la première extrémité 6 du corps de bouchon.

L'embase 8 comporte à cet égard une jupe annulaire 9 s'insérant dans le corps de bouchon 5 et une tête d'extrémité 10 qui vient en appui contre la surface externe du carter C.

L'ensemble du bouchon, y compris l'embase 8, présente une symétrie de révolution.

En ce qui concerne le clapet 3, celui-ci est monté de manière coulissante dans le bouchon 1, et notamment dans le corps de bouchon 5 entre une position d'obturation du bouchon, visible sur la partie gauche de la figure 1, et une position de transfert de liquide à travers le bouchon, visible sur la partie droite de la figure 1.

Le clapet comporte à cet égard un corps de clapet 11 comportant une première extrémité 12, tournée vers l'extérieur du carter et délimitant un premier épaulement 13 s'étendant de manière radialement externe et équipé d'un premier joint d'étanchéité 14, et une extrémité opposée 15 fermée, dotée d'une rondelle d'extrémité 16 supportant un deuxième joint d'étanchéité 17 venant en appui, dans la première position du clapet, contre la deuxième extrémité 7 du corps du bouchon 5.

On voit par ailleurs, sur la figure 1, que le corps de clapet 11 est doté d'ouies radiales, telles que 18, positionnées de manière à être disposées dans le volume interne du corps de bouchon 5, lorsque le clapet adopte la première position d'obturation, et à s'étendre à l'extérieur du corps de bouchon 5 lorsque le clapet adopte la deuxième position de transfert de liquide.

L'ensemble est complété par un ressort 19 de rappel placé en appui entre le corps de bouchon 5 et l'épaulement radial 13 pour solliciter le clapet dans la première position d'obturation.

Dans cette position d'obturation, les joints 14 et 17 sont respectivement en appui sur la jupe 9 de l'embase 8 et sur la surface externe du corps de bouchon 5.

On notera que les ouies sont par exemple au nombre de deux. Il est bien entendu que ce nombre peut être tout à fait variable, le résultat à atteindre étant le ménagement d'un passage suffisant entre l'intérieur du clapet et l'extérieur.

Le déplacement du clapet de la première position d'obturation à la deuxième position de transfert de fluide s'effectue au moyen d'un outil et, notamment, au moyen d'un adaptateur monté sur l'extrémité d'une conduite de vidange et qui vient se raccorder de manière réversible au bouchon durant toute l'opération de transfert du liquide.

L'adaptateur comporte à cet égard un tube de raccordement 22 pourvu de dents radiales telles que 23.

L'embase 8 comporte quant à elle, au niveau de l'alésage 4, une empreinte ou, de manière générale, un logement, dans lequel sont pratiquées un certain nombre de rainures longitudinales 24 permettant le passage des dents 23 du tube de raccordement lorsque l'adaptateur est correctement orienté par rapport au bouchon.

Ainsi, pour déplacer le clapet de la première position d'obturation à la deuxième position de transfert de liquide, il convient simplement d'exercer un effort de poussée sur le tube de raccordement 22 de l'adaptateur. Au cours de ce mouvement du tube de raccordement 22, les dents 23 sont insérées dans les rainures longitudinales 24 de l'embase 8 jusqu'à ce qu'elles débouchent au-delà de l'adaptateur.

Dans cette position, l'extrémité libre de la jupe 9 de l'embase 8 constitue une butée sur laquelle viennent reposer les dents 23 après avoir provoqué une rotation du tube de raccordement 22.

Dans cette position, le tube de raccordement 22, en appui sur sa butée, bloque le clapet en position de transfert de liquide, à l'encontre de l'effort exercé par le ressort de rappel 19, et les ouies 18 assurent une communication entre l'intérieur du carter C et le tube de raccordement 22 de l'adaptateur pour assurer la vidange du carter C.

On notera à cet égard que l'extrémité de l'embase, à savoir, l'extrémité libre de la jupe 9, est dotée d'un certain nombre d'empreintes radiales 25 sur laquelle s'appuient les dents 23 (figure 2), ces empreintes étant réalisées sous la forme de crans conformés de manière à bloquer en rotation les dents 23 après actionnement du clapet.

Dans le mode de réalisation décrit en référence aux figures 1 et 2, qui convient pour des dispositifs de transfert et, notamment, des bouchons de diamètre 12 mm, le corps de bouchon 5 est doté d'une embase 8 rapportée, collée ou soudée sur le corps 5.

Ce mode de réalisation est avantageux dans la mesure où l'embase peut alors être réalisée dans un matériau autre que celui utilisé pour la réalisation du corps de bouchon 5. L'embase peut à cet égard être réalisée par un procédé MIM (Moulage par Injection de Métal), par matriçage à froid ou à chaud par frittage de poudre métallique ou par usinage. Tout l'ensemble du bouchon peut à cet égard être également réalisé en matière plastique.

Ainsi, l'embase peut être réalisée dans un acier très dur et très résistant.

Comme indiqué précédemment, l'embase peut être collée ou soudée. On pourra avantageusement utiliser une soudure laser qui permet de souder sans endommager les joints caoutchouc.

On notera par ailleurs que dans le dispositif de transfert qui vient d'être décrit, on utilisera avantageusement une résine 26 disposée autour du corps 5 de bouchon, à l'endroit de son montage sur le récipient pour contribuer au maintien et à l'étanchéité du bouchon.

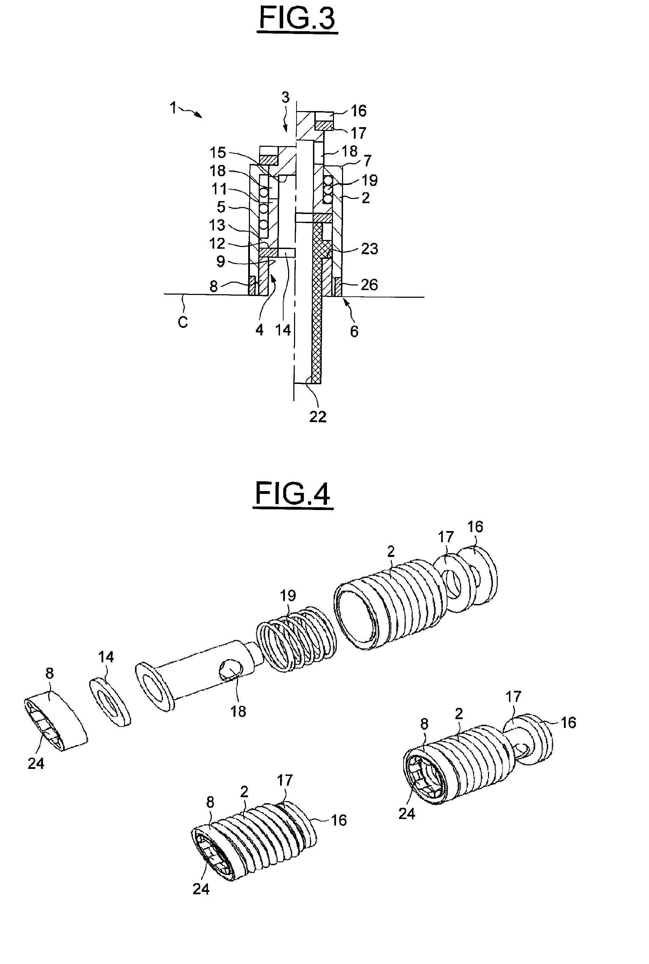

Dans le mode de réalisation de la figure 3, qui convient pour des diamètres de plus de 14 mm, le corps de bouchon 5 est dépourvu d'embase rapportée qui s'étend au-delà de l'extérieur du carter.

En effet, dans ce mode de réalisation, dans lequel des éléments identiques aux éléments décrits précédemment en référence aux figures 1 et 2 portent les mêmes références numériques, on utilise une embase 8 cylindrique, qui vient entièrement se monter à l'intérieur du corps de bouchon 5 de manière à affleurer le carter, lors du vissage complet du bouchon sur ce dernier.

Ce mode de réalisation est donc particulièrement avantageux dans la mesure où aucun élément du bouchon ne dépasse de l'extérieur du carter.

Bien entendu, dans ce mode de réalisation, l'embase 8 circulaire est également dotée de rainures longitudinales 24 destinées à permettre l'insertion du tube de raccordement 22 et provoquer, de la sorte, l'actionnement du clapet, et d'empreintes destinées à bloquer les dents en rotation.

On notera que dans les deux modes de réalisation, l'embase 8 est par ailleurs pourvue d'un alésage délimitant un logement polygonal conformé de manière à recevoir un outil de serrage de type clé à six pans.

Dans ce cas, les rainures longitudinales sont avantageusement prévues aux angles de l'alésage polygonal.

Dans l'exemple de réalisation illustré sur les figures, l'embase peut être dotée de six rainures longitudinales et d'un logement à six pans.

Bien entendu, on ne sort pas du cadre de l'invention lorsque l'on adopte une forme générale polygonale et un nombre quelconque de rainures longitudinales, par exemple au nombre de trois ou six.

On notera que le mode de réalisation de la figure 3 est avantageux dans la mesure où aucun élément ne dépasse alors du carter susceptible d'endommager par accrochage le bouchon ou le carter.

On notera enfin que dans les modes de réalisation des figures 1 à 3, on prévoira avantageusement un bouchon rapporté, aimanté, qui vient se positionner de manière à boucher la zone du bouchon accessible de l'extérieur, afin d'éviter que des salissures ou particules ne viennent altérer le bouchon voire empêcher le bon fonctionnement du clapet.

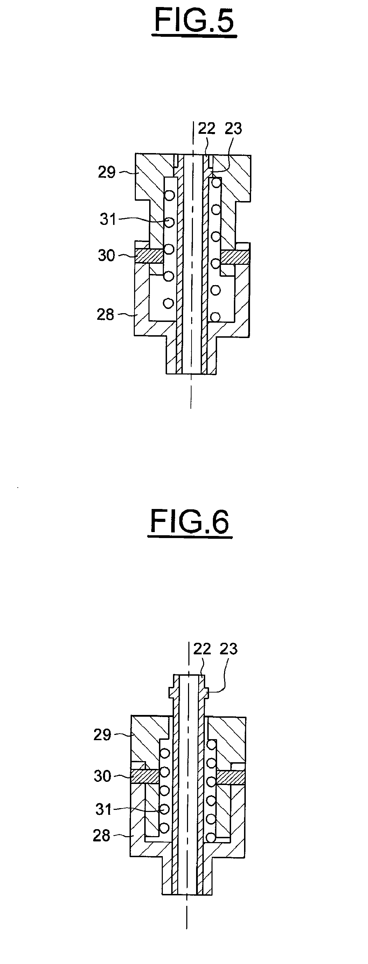

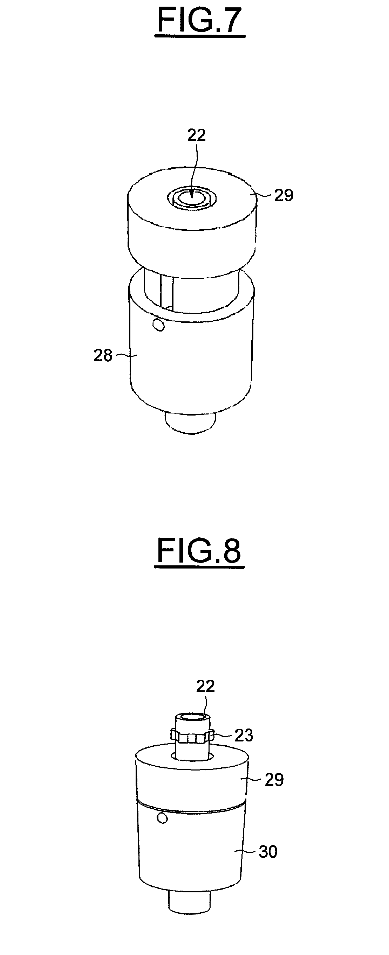

Sur les figures 5 à 8, on voit que l'adaptateur susceptible d'être utilisé avec le bouchon décrit précédemment en référence aux figures 1 et 3, comporte essentiellement un corps d'adaptateur 28 fixé à l'extrémité d'un tube d'aspiration (non représenté) et sur lequel est monté le tube de raccordement 22 doté de ses dents radiales d'extrémité 23.

L'adaptateur comporte encore une coiffe 29 axialement déplaçable par rapport au corps d'adaptateur 28 entre une position d'attente, visible sur la figure 5, dans laquelle la coiffe 29 s'étend entièrement autour du tube de raccordement 22 et une position active escamotée, visible sur la figure 6, dans laquelle la coiffe 29 libère le tube de raccordement 22 pour permettre son raccordement au bouchon 1 décrit précédemment.

On notera à cet égard que la coiffe 29 est dotée de pions radiaux 30 qui coulissent dans des fentes (non représentées) pratiquées dans le corps d'adaptateur 28, en vue de son guidage. Un ressort 31 sollicite la coiffe 29 dans sa première position de repos.

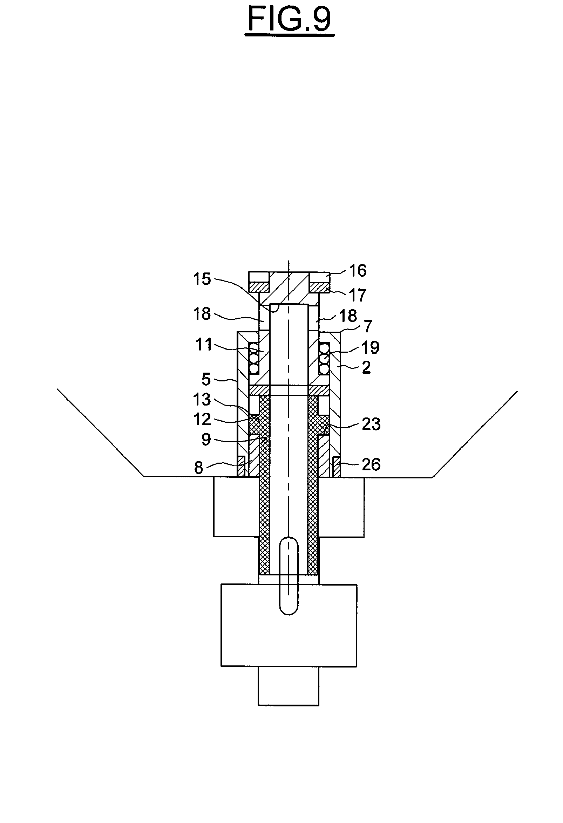

En se référant maintenant à la figure 9, pour utiliser le dispositif qui vient d'être décrit, il convient simplement de présenter l'adaptateur prévu à l'extrémité d'un tube d'aspiration sur un bouchon 1 d'un carter et à exercer un effort de manière à, d'une part, escamoter la coiffe 29 de manière à libérer le tube de raccordement 22 et, d'autre part, insérer ce tube de raccordement à travers l'embase 8 de manière à exercer un effort de poussée sur le clapet jusqu'à ce qu'il adopte sa position de transfert de fluide.

Il convient alors simplement de déplacer en rotation le tube de raccordement 22 de manière à positionner les dents 23 en butée sur l'embase 8.

On notera enfin que l'exemple de réalisation décrit précédemment s'applique à la vidange d'un carter, notamment le moteur de véhicule automobile.

Toutefois, on ne sort pas du cadre de l'invention lorsqu'il s'agit, de manière générale, d'assurer un couplage hydraulique entre, notamment, le réservoir et une conduite de raccordement de ce réservoir ou le raccordement de conduites, en utilisant un dispositif de transfert d'un liquide comprenant un élément de raccordement monté sur l'un des éléments à raccorder et doté intérieurement d'un clapet, et un adaptateur doté d'un tube de raccordement monté à l'extrémité d'une autre conduite à raccorder.

## Revendications

1. Dispositif de transfert d'un liquide, comprenant un élément de raccordement tubulaire (1) destiné à se fixer de manière étanché sur un orifice de transfert de liquide et comprenant un alésage (4) s'étendant de part et d'autre de l'élément de raccordement, et un clapet (3) monté de manière coulissante dans l'élément de raccordement entre une position d'obturation de l'élément de raccordement et une position de transfert de liquide à travers l'élément de raccordement à l'encontre d'un ressort de rappel (19) sollicitant le clapet en position d'obturation, le clapet étant susceptible de coulisser de la position d'obturation à la position de transfert de liquide sous l'action d'un adaptateur (22) connectable de manière réversible à l'élément de raccordement, **caractérisé en ce que** l'élément de raccordement tubulaire (1) et l'adaptateur comportent l'un un ensemble de rainures longitudinales (24) et l'autre des dents radiales qui s'engagent dans les rainures lors de l'actionnement de l'adaptateur (22), l'élément de raccordement comprenant une butée sur laquelle s'appuie l'adaptateur après actionnement du clapet par l'adaptateur.

2. Dispositif selon la revendication 1, **caractérisé en ce que** le clapet (3) est monté de manière coulissante dans l'alésage (4) entre la position d'obturation de l'élément de raccordement et la position de transfert de liquide et **en ce que** la butée est agencée à l'intérieur dudit alésage.

3. Dispositif selon la revendication 1 ou la revendication 2, **caractérisé en ce que** l'élément de raccordement tubulaire comporte un ensemble de rainures longitudinales pratiquées sur sa surface périphérique interne et destinées à recevoir des dents radiales (23) prévues sur l'adaptateur, lesdites rainures délimitant la butée sur laquelle s'appuient lesdites dents après actionnement du clapet par l'adaptateur.

4. Dispositif selon l'une des revendications 1 à 3, **caractérisé en ce que** l'extrémité de l'élément de raccordement tubulaire comprenant la butée comprend des empreintes aptes à bloquer les dents radiales en rotation après actionnement du clapet.

5. Dispositif selon l'une des revendications 3 à 4, **caractérisé en ce que** l'élément de raccordement comporte un corps (2) doté d'un filetage externe (5) destiné à coopérer avec un filetage correspondant prévu sur l'orifice de transfert de fluide, et comprend un alésage (4) dans lequel sont pratiquées les rainures longitudinales, ledit alésage ayant une forme en coupe polygonale apte à recevoir une clé de vissage polygonale de l'élément de raccordement.

6. Dispositif selon la revendication 5, **caractérisé en ce que** les rainures longitudinales (24) sont prévues au sommet de ladite forme polygonale.

7. Dispositif selon l'une des revendications 5 et 6, **caractérisé en ce que** l'alésage est hexagonal et comporte un ensemble de trois ou six rainures.

8. Dispositif selon l'une quelconque des revendications 3 à 7, **caractérisé en ce que** l'élément de raccordement tubulaire comporte une embase (8) sur laquelle sont pratiquées lesdites rainures longitudinales et délimitant ladite butée, l'embase (8) étant fixée sur l'élément de raccordement par collage ou soudage.

9. Dispositif selon la revendication 8, **caractérisé en ce que** l'embase est réalisée dans un matériau différent du reste du bouchon.

10. Dispositif selon la revendication 8, **caractérisé en ce que** l'élément de raccordement comporte un corps (2) dans lequel est ménagé l'alésage (4), l'embase (8) comportant une jupe annulaire (9) insérée dans ledit corps et sur laquelle sont pratiquées lesdites rainures longitudinales, une extrémité libre de la jupe annulaire délimitant la butée.

11. Dispositif selon l'une quelconque des revendications 1 à 10, **caractérisé en ce que** lors du montage du dispositif de transfert sur un récipient, l'élément de raccordement affleure la surface du récipient.

12. Dispositif selon l'une quelconque des revendications 1 à 11, **caractérisé en ce que** le clapet (3) comporte un corps de clapet (11) ayant une première extrémité dotée d'un premier épaulement (13) équipé d'un premier joint d'étanchéité (14) qui vient en appui sur la butée en position d'obturation et qui constitue une surface d'actionnement du clapet, et une deuxième extrémité (15) dotée d'un deuxième joint d'étanchéité (17) reposant en appui sur l'élément de raccordement tubulaire en position d'obturation du clapet.

13. Dispositif selon la revendication 12, **caractérisé en ce que** le premier joint (14) est disposé en retrait par rapport à l'extrémité libre de l'élément de raccordement destinée à recevoir l'adaptateur.

14. Dispositif selon l'une quelconque des revendications 1 à 13, **caractérisé en ce qu'**une résine (26) est disposée autour de l'élément de raccordement tubulaire, à l'endroit de son montage sur le récipient.

15. Dispositif selon l'une des revendications 1 à 14, **caractérisé en ce qu'il** comporte en outre un adaptateur (22) comprenant un corps d'adaptateur (28) destiné à être raccordé à une conduite de transfert de liquide, un tube de raccordement (22) monté sur le corps et doté des dents radiales ou des rainures longitudinales, le tube de raccordement étant configuré pour à la fois provoquer le déplacement du clapet (3) de la position d'obturation à la position de transfert de liquide et venir s'appuyer sur la butée pour bloquer le clapet (3) en position de transfert de liquide.

16. Dispositif selon l'une quelconque des revendications 3 à 15, **caractérisé en ce qu'il** comporte en outre un adaptateur (22) comprenant un corps d'adaptateur (28) destiné à être raccordé à une conduite de transfert de liquide, un tube de raccordement (22) monté sur le corps et doté de dents radiales (23) d'extrémité et une coiffe (29) montée axialement déplaçable par rapport au corps à l'encontre d'un ressort de rappel (31) entre une position stable déployée dans laquelle elle coiffe le tube de raccordement et une position instable escamotée par rapport au corps, rendant accessible le tube de raccordement.
